# EUROPEAN PATENT SPECIFICATION

(11) **EP 3 494 338 B1**
(45) Date of publication and mention of the grant of the patent: **23.03.2022**
(21) Application number: 16797656.2
(22) Date of filing: 03.08.2016
(51) Int. Cl.: F16K 47/08, F16K 3/24

(54) **TRIM FOR A CONTROL VALVE WITH LOW NOISE EMISSION**
VERKLEIDUNG FÜR EIN STEUERVENTIL MIT NIEDRIGER GERÄUSCHEMISSION
GARNITURE DE VANNE DE RÉGULATION À FAIBLE ÉMISSION DE BRUIT

(43) Date of publication of application: 12.06.2019
(73) Proprietor: IMI CCI Italy S.r.l., 20123 Milano (IT)
(72) Inventor: MASTROVITO, Marco, 70023 Gioia del Colle (BA) (IT); KOTHESOVEC, Bernhard, 1130 Vienna (AT); GIOVE, Fabio, 70023 Gioia del Colle (BA) (IT)
(74) Representative: Bruni, Giovanni
(86) International application number: PCT/IT2016/000190
(87) International publication number: WO 2018/025281

(56) References cited:
- GB-A- 2 520 576
- JP-A- S58 184 381
- US-B1- 6 244 297

## Description

### Technical field of the invention

The present invention relates to a *trim,* i.e. the assembly comprising the fixed part of the control body of the valve, also called "resistor" and the movable part also called "shutter", for a control valve. Hereafter the term "trim" will be always used with reference to the assembly comprising a shutter and a resistor which are the subject of the present invention. In particular, the invention is usable for all control valves for controlling compressible fluids, having stringent requirements regarding low noise emission and reduced kinetic energy at the exit of the valve, ie of its *trim.* The features of the invention which will shown hereafter can be a part of the resistor of the valve as well as of any other flow resistance serving to attenuate the noise or to create a back pressure. For example, the same principles are applicable to a valve internally provided with a cage as a main control method of the flow rate or to a resistor used for emitting a fluid in the outside environment or to create pressure reductions, but being devoid of control bodies.

### Prior art

As known, all applications in the markets both for "Power", and for "Oil & Gas" in which cage valves are used, which are provided with *trim* which must meet requirements of low noise emission and reduced kinetic energy, are a potential market for this invention. Current technologies are based on resistors made of a sequence of annular discs stacked one onto the other with entrances radially arranged on the inner surface and exits radially arranged on the outer surface, both being axially symmetric. The plurality of annular discs circumscribes the shutter of the valve and therefore following the lifting of the shutter, or its partial or total stroke, the number of entrances of the fluid varies: for very partially defined strokes, the shutter will free just the entrance openings relative to the lower discs of the stack of discs, whereas for gradually greater lifts the shutter will free and make available to the flow also the entrance openings of the upper discs. The fluid will flow within the passages, with a radial and axial direction, which are formed in a disc or in a pair of discs (the disc or the pair of discs will make the single resistor module). The pressure drop of the fluid inside the resistor, with consequent reduction of the output speed and of the noise produced, is mainly caused by concentrated resistances made by variations of the direction of the fluid inside the passages, for example, by a variation from a radial direction to an axial direction and vice versa. Every change in direction will also be called hereafter as a stage, and also multistage resistors will be cited, meaning resistors provided with a plurality of changes of direction of the fluid circulating within them.

Such a technique is known, as can be seen, for example from document US2012216887 A1, in which a resistor is described which is made of a plurality of discs mutually stacked and provided with a plurality of inlet ports arranged along the inner peripheral edge and a plurality of outlet ports arranged along the outer peripheral edge. The plurality of outlet ports comprises a first set of outlet ports and a second set of outlet ports. The width of the outlet ports is different between the two sets. The plurality of inlet ports and the plurality of outlet ports are so arranged that the fluid entering from an inlet port exits through an outlet port of one of the two sets.

Document US2011214764 A1 also describes a resistor similar to that previously described and also provided with outlet ports, and in which the outlet area comprises a plurality of outlet ports having mutually different dimensions, so as to substantially reduce the sound generated.

Furthermore, document US6244297 describes a fluid pressure reduction device comprising a stack of annular plates defining pressure reduction stages adjacent one to another and coupled in series to define a pressure reduction flow path from said fluid inlet to said fluid outlet. Document JPS58184381 describes a valve seat with two discs each of which is equipped with a hole in which a valve piece slides in the center part and further with a small hole. Continuous flow of fluid from a high pressure side to a low pressure side is not interrupted, the flow is expanded stepwise through the small hole. Finally, document GB2520576 describes a method for manufacturing a valve or valve trim with one or more tortuous flow paths, that is the additive manufacturing technique.

The known solutions therefore require either a high number of stages or special devices requiring great encumbrances rather than complex implementation technologies and ultimately causing significant costs.

There is therefore a need to define a resistor for a control valve which is free from the drawbacks mentioned before.

### Summary of the invention

Purpose of the present invention is to solve following technical problems: to simplify the implementation technology of multi stage passages inside the disc, which in turn can be made of a very expensive material (for example nickel alloys) or with very great dimensions, so obtaining resistance performances of the entire resistor by using additional measures compared to those of the prior art.

For such purpose, the invention has following elements:
a) the inter-modular axial passages which connect a plurality of resistor modules: they allow to use even with strongly partialized strokes of the shutter, all the output stages of each resistor module, even those throw which the flow would not pass, as the corresponding inlets are occluded by the valve shutter;
b) jaggies, or special marks and/or indentations, placed near the output ports allowing to create high frequency turbulences which in turn reduce the level of noise produced at audible frequencies;
c) the modularity of the resistor, which according to the needs can vary from the value of module 1 (single disc) to the higher value modules of any kind (for example a value module 2 with a pair of discs or a value module 4 with a double pair of discs)
d) the manufacturing technologies, which may be, for example, electro-erosion, laser cutting, punching, sintering.

The resistor for control valves according to the present invention has the characteristics set forth in the independent claim of the product.

Further preferred and/or particularly advantageous embodiments of the invention are described according to the characteristics set forth in the appended dependent claims.

### Brief Description of Drawings

The invention will now be described with reference to the appended drawings, which show some examples of non-limitative embodiments, in which:
- Figure 1 is an axonometric view of a resistor of a control valve according to the present invention,
- Figure 2 is a view of a basic element of the resistor of Fig. 1,
- Figure 3 schematically shows a trim not being part of the present invention in a section through the symmetry axis, adapted in order to show the inner axial channels,
- Figure 4 shows the subdivision of the outlet sections of the disc,
- Figure 5 shows the jaggies along the outlet sections of the disc,
- Figure 6 shows a disc made by means of electro-erosion technology,
- Figure 7 schematically shows in a section through the symmetry axis, an embodiment of the resistor according to the invention, particularly adapted to attenuate the noise generated inside the resistor itself,
- Figure 8 schematically shows in a section perpendicular to the symmetry axis, the resistor of Figure 7,
- Figure 9 schematically shows in a section through the symmetry axis , an exemplary embodiment of a resistor not being part of the present invention, in a configuration of a partial stroke of the shutter,
- Figure 10 schematically shows, in a section through the symmetry axis, the embodiment of the resistor of Figure 9, in a configuration of a full stroke of the shutter,
- Figure 11 schematically shows, in a section through the symmetry axis, another exemplary embodiment of a resistor not being part of the present invention,
- Figure 12 graphically shows the characteristic curve of the outflow coefficient or of the shutter stroke typical of a characterized resistor which is not part of the present invention,
- Figure 13 schematically shows, in a section through the symmetry axis, the characterized resistor of Figure 12, which is not part of the present invention,
- Figure 14 schematically shows, in a section perpendicular to the symmetry axis, the variable number of inlets in various discs forming the resistor,
- Figure 15 is a graph showing the trend of the noise as a function of the reduction pressure ratio upstream and downstream of the *trim* according to one embodiment of the present invention in conditions of full stroke of the valve shutter,
- Figure 16 shows the same graph as Fig. 15 but in conditions of partial stroke of the shutter.

### Detailed description

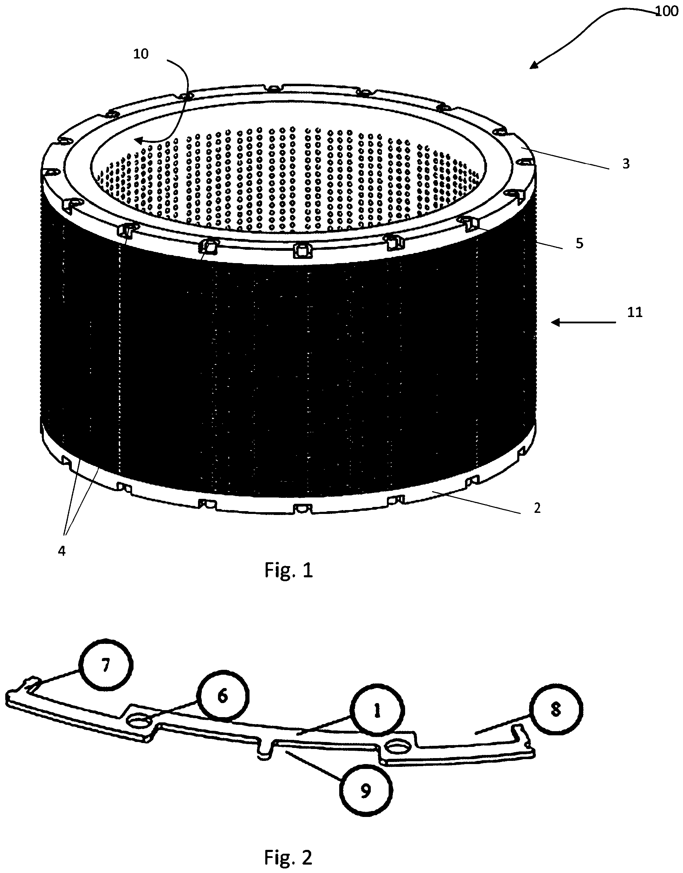

With reference to the above Figures, Figure 1 is an axonometric view of a resistor 100 of a control valve according to one embodiment of the present invention. The resistor 100 includes a plurality of annular discs 11 stacked one onto the other. The discs 11 are formed from a metal sheet (ie either from parts of a forged bar, or by direct investment casting techniques, or by laser sintering or whatever) and can be made either of a single piece or advantageously of a plurality of circular sectors connected together, for example by welding. The realization with circular sectors is advantageous as it minimizes the waste of the metal sheet. Each of these circular sectors constitutes a base element 1 of the resistor 100 and is shown in Fig. 2. The resistor 100 in Fig. 1 further comprises a lower plate 2 and an upper plate 3 between which the plurality of discs is interposed. A plurality of threaded rods or bars 4 and associated tightening nuts 5 can connect as a package the two plates and the discs stacked between them, but the connection can also occur in other ways. The base element 1 is suitably shaped so as to be provided with holes 6 for the passage of threaded bars through interlocking edges 7 ensuring the connection between two adjacent base elements and consequently the stability of the disc 11. The base element is also provided with inlet ports 8 and outlet ports 9 for the passage of the working fluid. A perforated cage 10, radially internal with respect to the discs 11, can be provided as shown in Fig. 1.

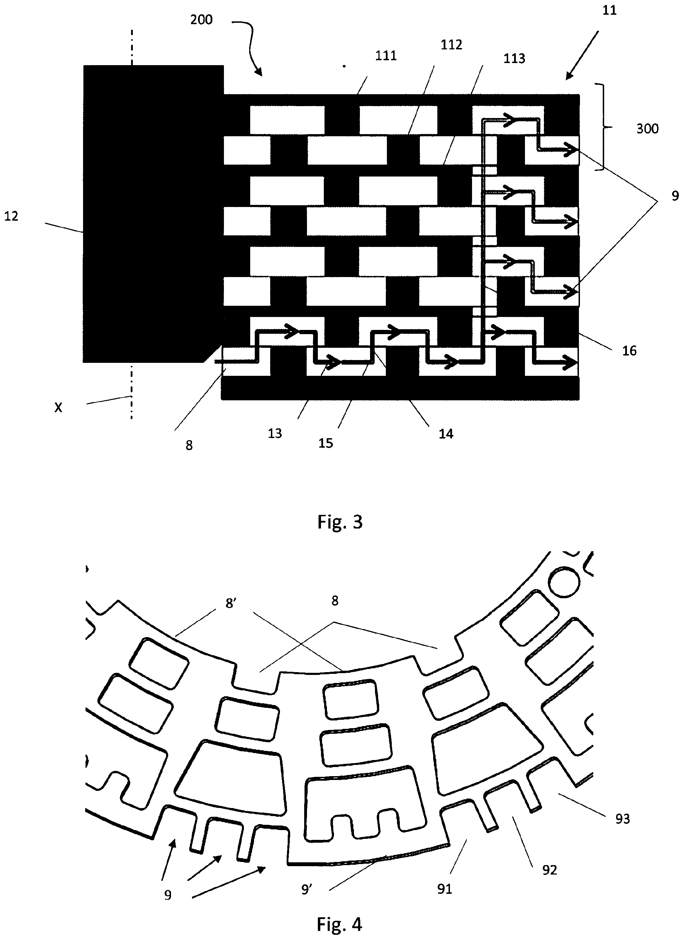

With reference to Figure 3, schematically showing the resistor 100, which is not part of the present invention, in a section through the symmetry axis of the *trim* 200, it is possible to identify the characteristic elements of the resistor.

First of all, the modularity of the discs 11 stacked one onto the other and making the resistor is given by the sequence of a first disc 111, a second disc 112 and a separator disc 113 the thickness of which is less than that of the other two discs. Such sequence can be repeated for an indefinite number of times depending on the application. It is clear that the height of the resistor will be sized so that with a minimum stroke of the valve shutter 12 (ie with the valve fully closed) the shutter will occlude all the input ports 8 of the discs 11, whereas with the maximum stroke of the shutter (ie with the valve fully open) all the inlet ports 8 will be open to the passage of the working fluid. One of the discs of the sequence "first disc 111 - second disc 112" will be provided with a plurality of inlet ports 8 angularly spaced along a peripheral inlet 8' (in Figure 4) of the generic disc 11. Similarly, one of the discs of the sequence "first disc 111 - second disc 112" will be provided with a plurality of outlet ports 9 angularly spaced along a peripheral output 9' of the generic disc 11. Both the first disc 111 and the second disc 112 are provided with inner passages for the passage of the fluid. Said passages may be either radial passages 13 or axial passages 14. It is clear that between a radial path and a subsequent axial path there will be a localized resistance consisting of the loss for a change of direction of the working fluid which will be called stage 15. In each stage 15 a pressure drop occurs. The radial passages 13, the axial passages 14 and the stages 15 are made within the individual pairs of discs 111, 112 (or the single module 300). The presence of a separating disc 113 between two consecutive pairs of discs 111, 112, permits to each fluid path to be made within a single module 300. In fact, each module 300 will be provided with inlet ports 8 and outlet ports 9 in a fluid communication by means of the aforesaid radial and axial passages. The presence of the separator disc 113 may be avoided (as it occurs in other designs, but its presence guarantees the kinetic energy control, as the pressure drop on the single stage 15 is known and is invariant as a function of the shutter opening 12.

The characteristic opening/rate of *trim* 200 will then be defined moreover by the number of stages 15: the higher such number, the greater will be, other conditions being equal, the reduction in pressure upstream and downstream of the resistor.

Such pressure ratio upstream and downstream of the resistor effectively influences the noise and vibration produced by the resistor itself. In known solutions, such ratio is only determined by the number of stages employed in the disc, ie the number of concentrated resistances, linked to the variation of the flow direction. In this way the relationship between the outlet and the inlet area becomes a compromise between the performance of the resistor, in other words of its outflow coefficient Cv obtainable with the same encumbrance, and noise/vibration tolerated requirements.

In order to increase the efficiency in terms of attenuation of the resistor noise without excessively penalizing the radial encumbrance of the same by increasing the number of stages and without excessively reducing the outflow coefficient, the resistor comprises a plurality of inter-modular axial passages 16, usually at the last stage and in any case before the outlet 9. Such inter-modular axial passages allow the working fluid to be spread among multiple modules of the resistor therefore benefiting of greater outlet sections (regardless of the shutter stroke 12). In this way the kinetic energy of the working fluid at the outlet of the resistor will be lower and consequently, the more attenuated will be the noise produced.

It is clear that such arrangement is more effective when the shutter stroke is partialized and on the other hand it is known that the most severe conditions in terms of fluid noise precisely occur in such conditions: therefore this consideration allows us to better understand the usefulness of such feature. In the example of Figure 3 it is clearly seen that in conditions of a very partialized stroke just one module (the lower one) would be interested in the passage of the working fluid. The presence of inter-modular axial passages instead allows to distribute the flow between the four resistor modules.

With reference to Figure 4, the resistor 100 also has the additional feature to divide a generic output port 9 in a greater number of output ports of smaller cross section 91, 92, 93.

Considering that the sound frequencies of the emitted noise are inversely proportional to the size of the passage cross sections, by dividing the outlet ports in ones of smaller cross section, moves the sound frequencies towards higher values, practically outside the human auditory range (conventionally around 20kHz) or otherwise they can be more easily attenuated in the outlet piping. In particular, having the same size for the outlet ports 91, 92, 93 maximizes the increase of the frequency.

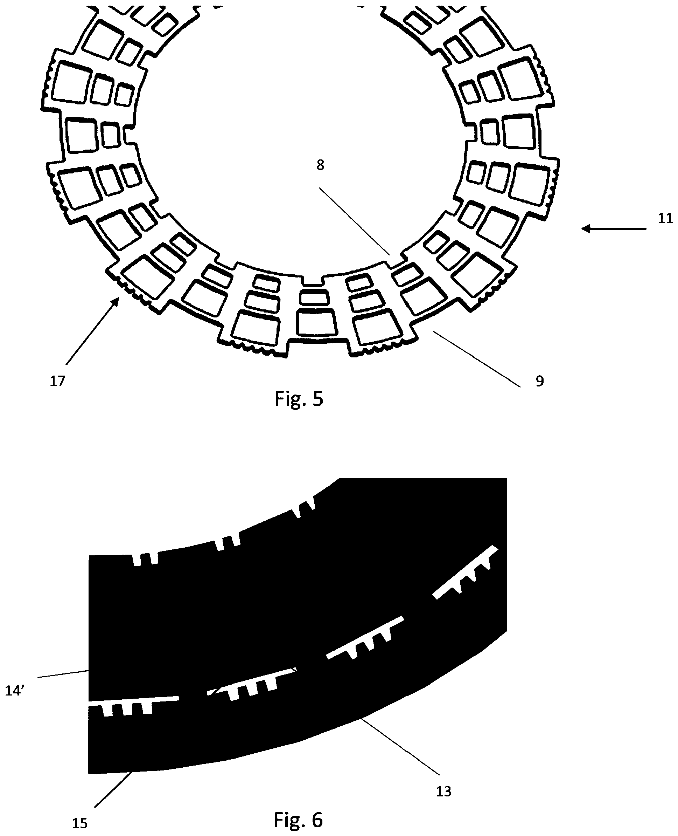

Figure 5 shows a further characteristic of the resistor 100. In particular in this Figure jaggies 17 are highlighted in the vicinity of the outlet ports 9 of the disc 11. Such jaggies, in some way similar to the indentations of the wings of an owl - in the vicinity of the outlet ports allow to create turbulences with a very high frequency so that they further reduce the noise level produced at audible frequencies.

A proper indentation of the outlet ports can increase the energy locally dissipated by viscous forces, so reducing the energy converted in acoustic energy. The indentation patterns can be optimized in a different way, and can be realized both on the main discs and on the separator disc depending on the specific requirements, as shown in Fig. 5 in a purely illustrative way.

The processes of machining of the discs 11 are multiple: punching, laser cutting, sintering, electro-erosion and other known technologies. There is no technological limit in the realization of the discs according to the invention. The production of the trim may also occur by laser sintering of powders, and then it could not be solely bound to the production of sheet discs.

In particular, in the case of production with the punching method of thin sheets, generally two different designs are used for the two discs which form the module, both for the version with basic elements and for the version with an integral ring. In the case illustrated in Figure 4, it is possible to use only one cutting pattern for both discs, specularly to 180°, thus reducing the number of variants and improving productivity.

In particular, using the electro-erosion working technology, it is possible to realize the entire channel system - in this case made by radial passages 13, tangential passages 14', changes of direction 15 (stages) and inter-modular passages 16 - on a single disc, as seen in Fig. 6. In practice, according to this embodiment, the entire module is made from a single disc.

Even if the most significant noise source in the valve occurs at the outlet of the resistor, in the case of multi-stage resistors it is convenient to cut a certain amount of noise which is internally generated within each stage of the resistor. Depending on the flow conditions and of the type of pressure reduction through the stages, such noise contribution internally generated can be important. Such internally generated noise is attenuated by losses occurring during the passage of the noise from the stage in which it was generated towards the outlet of the resistor.

From previous knowledge, in addition to the instructions given in the international regulations for the calculation of noise in valves, it is known that the last stages produce a greater internal noise and maximum attention is given in order to find out methods to reduce the noise generated at the outlet, or to move its peak frequency towards a non-audible range, or to distribute the noise over a plurality of frequencies, in order to reduce the noise peak.

The use of inter-modular axial passages, especially in the vicinity of the last stages, is also useful to solve this problem, contributing to attenuate with the maximum efficiency the noise internally generated upstream of said inter-modular axial passages.

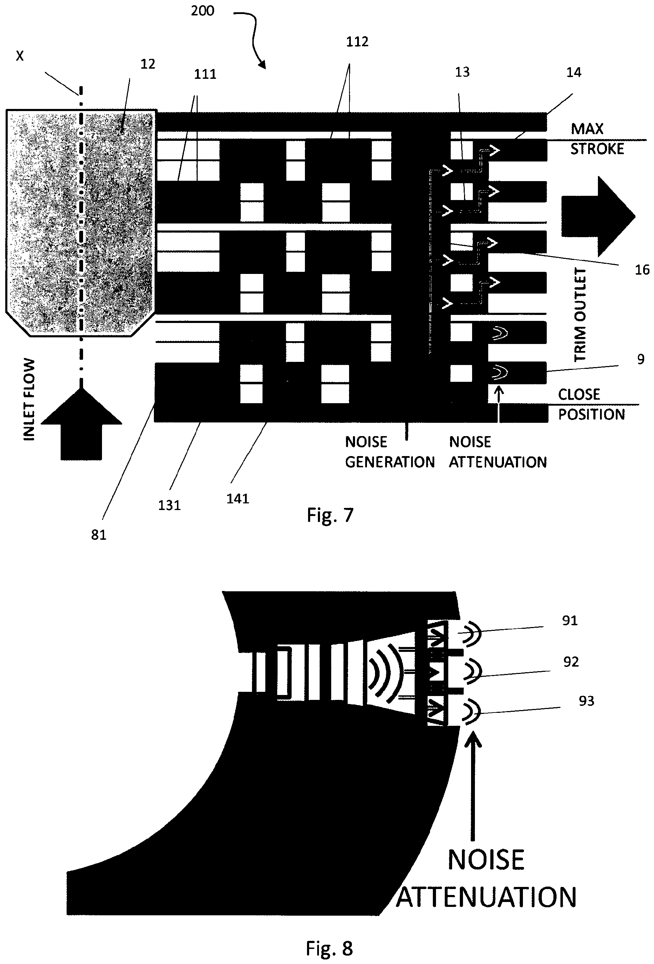

With reference to Fig. 7, in the resistor according to the invention, radial passages 131 and axial passages 141 upstream of the inter-modular axial passages 16 can be designed so as to produce a noise in a frequency range which can then be greatly attenuated in the subsequent passages or, vice versa, the outlet port can be designed to maximize the attenuation of the noise up to the frequency peak corresponding to the noise generated by the upstream pressure reducing stages.

In order to effectively promote such effect of a greater attenuation, the size of the outlet ports 9 is reduced compared to the size of the internal flow passages. A possible embodiment of the present invention is illustrated in Figure 7, in which the height of the radial passages 131 and axial passages 141 upstream of the inter-modular axial passages 16 is doubled compared to the height of the radial passages 13 and axial passages 14 downstream of the inter-modular axial passages 16. In other words, the height of the inlet ports 81 is doubled compared to the height of the outlet ports 9. According to this embodiment, the module upstream of the inter-modular axial passages 16 assumes a value of 4, which is made of a first pair of discs 111 and a second pair of discs 112.

Similarly, when the internal channel feeds a plurality of outlet ports 91, 92, 93 of smaller size, as shown in Figure 8, an increase of the loss for noise transmission is obtained.

By using the same concept associated with the use of inter-modular axial passages 16, in order to increase the overall outlet area from the resistor for partial strokes, it is possible to define additional alternative embodiments which allow to apply the concept already described for partial strokes of the valve shutter even in case of complete opening of the same. The technique shown below can be used both individually and in a combined form with arbitrary proportions of either component in order to achieve the desired results.

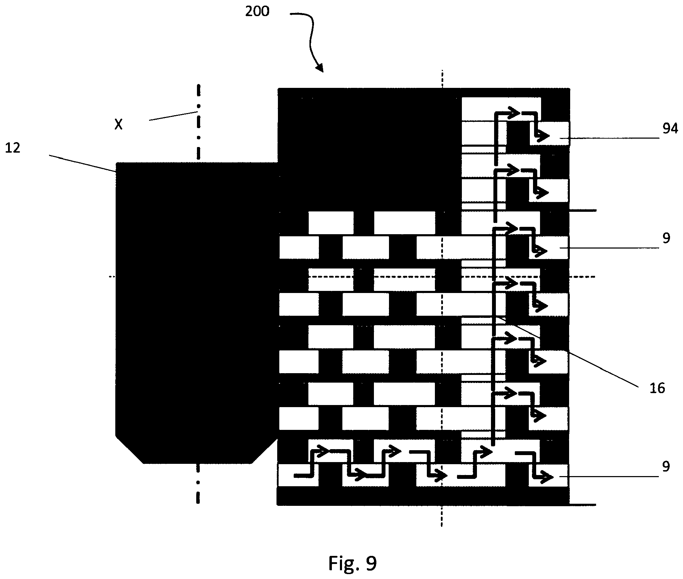

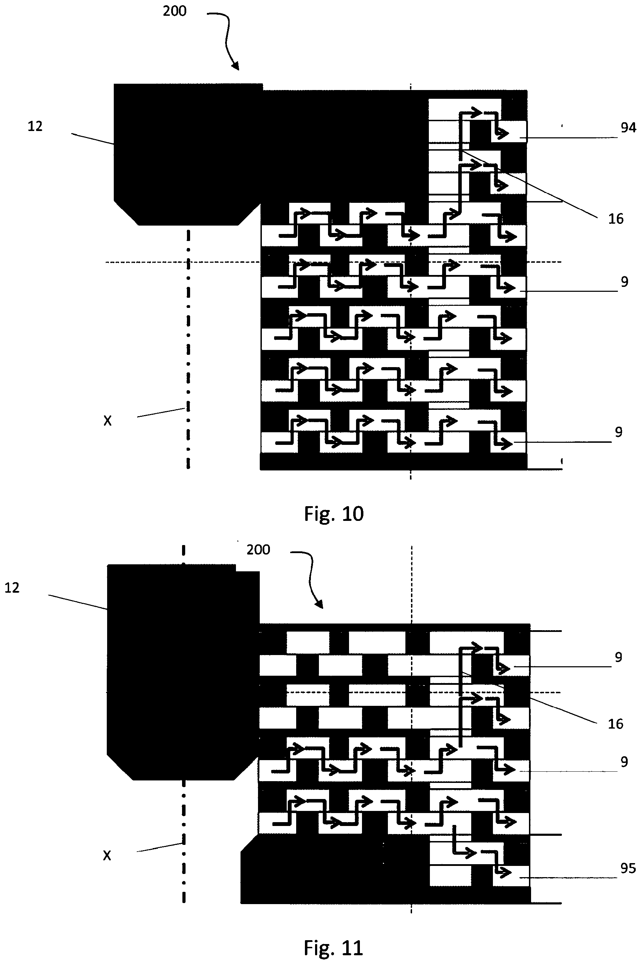

With reference to Fig. 9 and 10, representing schematically a cross section of an exemplary resistor, not being part of the invention, on a plane containing the shutter axis (in Fig. 9 with partial stroke, Fig. 10 being the maximum shutter stroke), the outlet ports 9 can then be realized also above the maximum height up to which the shutter can be lifted (in the Figure this outlet port is referenced with 94). In this way an increase of the outlet area of the resistor can be reached, both when the shutter is partially open (Fig. 9), and when the shutter is at its maximum opening as shown in Fig. 10.

With reference to Fig. 11, the same concept can be applied by using the space below the resistor in order to achieve the outlet piping 95 connected to the already described inter-modular axial passages 16.

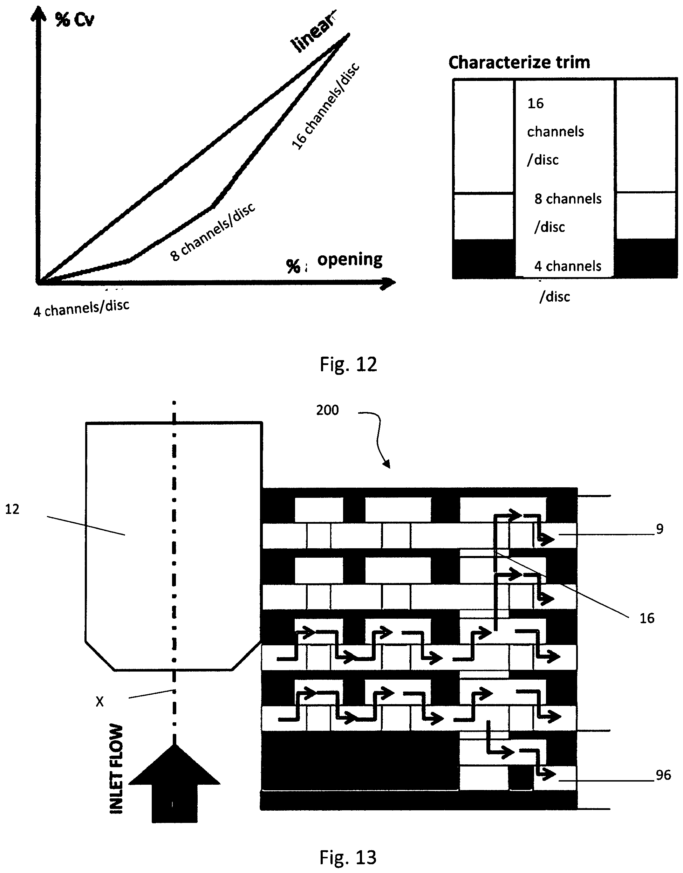

With reference to Fig. 12, which shows the characteristic of a valve in terms of outflow coefficient Cv depending on the degree of opening, the linear characteristic of the valve often it is not the most suitable to ensure the control of a process, so that it is often required that for the same displacement (increase of the shutter stroke), the variation of the outflow coefficient is more reduced for low openings and greater for high openings of the valve. In these cases one speaks of a characterized *trim.*

In the technique with tortuous passage the most used ways to obtain this characteristics are the following:
- increasing the number of turns in each channel so as to reduce the outflow coefficient by low openings,
- reducing the number of channels (sectors) formed in parallel on the same disc for discs positioned in the vicinity of the valve seat.

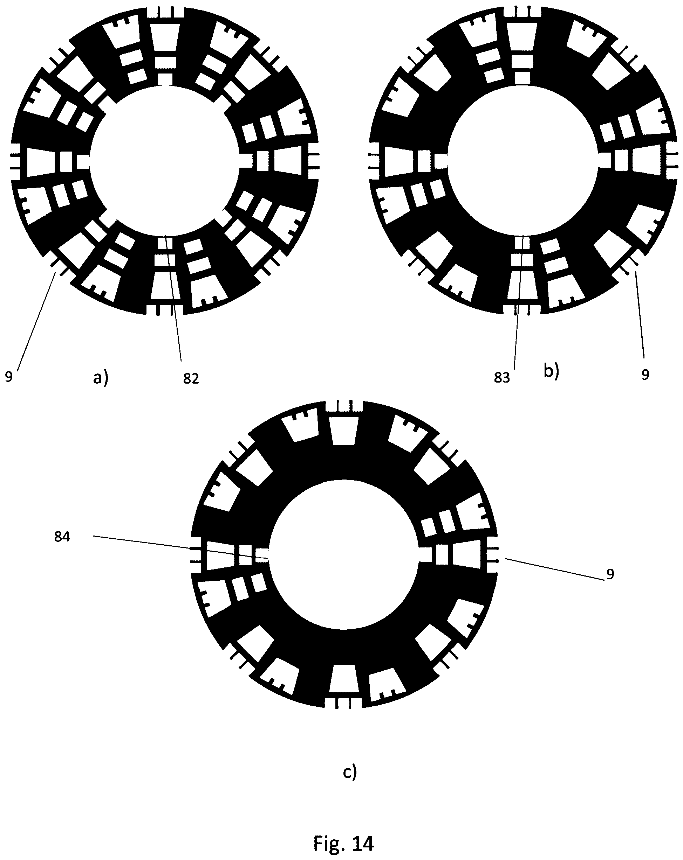

The second option is the most efficient one and has the advantage that it can be modified as illustrated with reference to Fig. 13 and 14.

The number of inlets of each disc of the lower part of the resistor is reduced compared to the number of outlets. If we consider the exemplary embodiment of Fig. 13 and 14 it can be seen that the number of outlet ports 9 is kept constant (equal to sixteen in the illustrated example) so as not to vary the number and the position of the inter-modular axial passages 16. The number of inlet ports 82 at the top of the resistor is equal to the number of outlets ie sixteen, whereas in the intermediate part of the resistor the number of inlet ports 84 is reduced to eight and finally in the lowest part of the resistor itself the number of inlet ports 84 is reduced to four. In this way the desired characteristic with a broken line is obtained as shown in Fig. 12. The outlet ports 96 of the resistor in the part where the inlets are reduced will be fed, through the inter-modular axial passages 16, by the fluid coming from inlets of the upper discs as schematically shown in Fig. 13.

Experimental tests prove the validity of the solution.

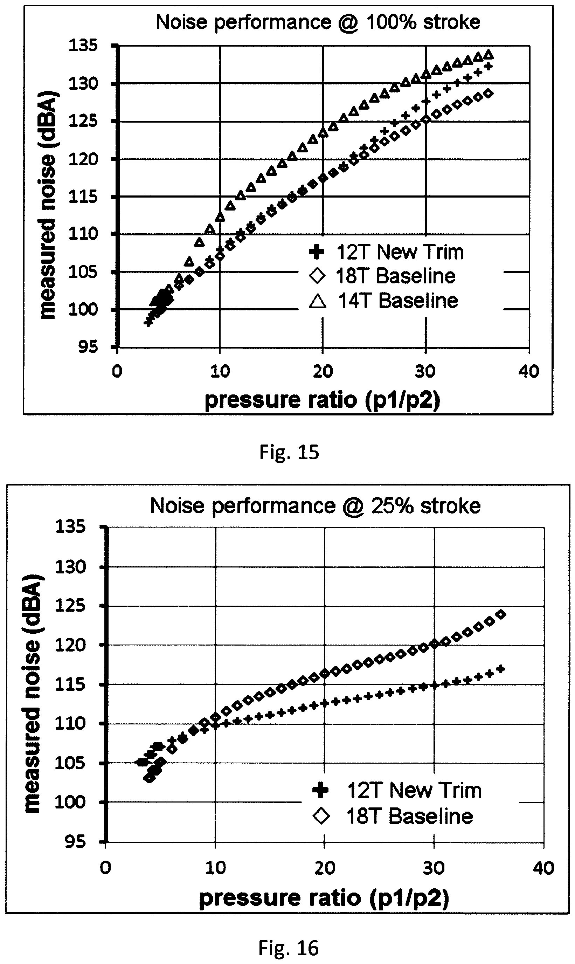

With reference to Fig. 15, the *trim* 200 of the present invention has been evaluated in terms of effectiveness in respect of the standard technology. The test did not include a real valve, since it has been performed only on the *trim* 200 in order to get objective data, not influenced by the attenuation of the valve body and of the downstream piping. Due to the spectral distribution of the noise obtained, even better results are expected when the resistor will be used in real valves with associated piping. The curves of Fig. 15 are obtained at the maximum stroke of the resistor, corresponding to the maximum opening of the valve. The abscissa shows the pressure ratio p1/p2 between the internal pressure upstream of the valve, and the external pressure downstream of the resistor. The ordinate instead shows the average noise measured in dBA.

At maximum stroke of the resistor, which in this example has 12 stages and is provided with the subject of the present invention characteristics, performances are shown which can be compared with those of a standard resistor with 18 stages and are definitely better than those of a standard 14-stage resistor, equally to the pressure ratio. Such performances were achieved in spite of the fact that the flow rate of fluid in the resistor with 12 stages, according to the invention, was approximately 20% greater than the flow rate of fluid in the standard resistor with 18 stages.

The graph of Fig. 16 having the same units on the abscissa and on the ordinates, shows instead the comparison for a value of the stroke of the resistor equal to 25% of the total stroke, thus simulating a definitely parzialized condition of the valve. As seen in the Figure, the resistor with 12 stages, according to the invention, has been able to overcome the standard technology in spite of a smaller number of pressure reduction stages (12 instead of 18) and of a greater flow capacity: about 25% more of the flow was able to pass through the resistor with 12 stages compared to the standard resistor with 18 stages. As it is easy to understand, this is a great confirmation that the concepts explained in this document are able to support the technologies pointing to a low noise and a more compact module.

In addition to the modes of the invention, as described above, it is to be understood that there are many further variants. It must be understood that these modes of implementation are only exemplary and they limit neither the subject of invention nor its applications, nor its possible configurations. On the contrary, although the description made above makes it possible for an expert in the field to implement the present invention at least according to one of its exemplary configuration, it must understood that numerous variations are conceivable of the components described, without departing from the subject of invention, as defined in the appended claims.

## Claims

1. Resistor (100) for a control valve comprising:
- a plurality of modules (300), comprising one or more annular discs (11) stacked to each other, each module (300) being provided with inlet openings (8) and outlet openings (9) in fluid communication through radial passages (13, 131), changes of direction (15) and axial passages (14, 141) formed inside of said annular discs (11),
- a lower plate (2) and an upper plate (3) between which the plurality of modules (300) is interposed,
- fastening means which stably connect the lower plate (2) and the upper plate (3) and the plurality of modules (300), the resistor (100) having inter-modular axial passages (16) which bring into fluid communication the radial passages (13, 131) and the axial passages (14, 141) of different modules of said plurality of modules (300) at any percentage of shutter stroke (12),
wherein said annular discs (11) have indentations (17) in correspondence of the outlet openings (9),
wherein the height of the radial passages (131) upstream of the inter-modular axial passages (16) is greater than the height of the radial passages (13) downstream of the inter-modular axial passages (16),
the resistor (100) being **characterized in that** the height of the axial passages (141) upstream of the inter-modular axial passages (16) is greater than the height of the axial passages (14) downstream of the inter-modular axial passages (16).

2. Resistor (100) according to claim 1, wherein the outlet openings section (9) is divided into at least two outlet openings of lower area (91, 92, 93).

3. Resistor (100) according to claims 1 or 2, wherein a single module (300) comprises a first disc (111), a second disc (112) and a separator disc (113) having a lower thickness than the other two discs, so that the radial passages (13, 131), the changes of direction (15) and the axial passages (14, 141) are made within the module (300) itself.

4. Resistor (100) according to claims 1 or 2, wherein a single module (300) comprises two consecutive pairs of discs (111, 112) and a separator disc (113), so that the radial passages (13, 131), the changes of direction (15) and the axial passages (14, 141) are made within the module (300) itself.

5. Resistor according to any of the preceding claims, **characterized in that** its structure is formed by means of sintering techniques, three-dimensional laser, three-dimensional printing.

6. Resistor (100) according to any of the preceding claims, wherein the discs (11) are formed by electro-erosion, which realizes the radial passages (13), the changes of direction (15) and the axial passages (14) on a single disc (11).

7. Resistor (100) according to any of the preceding claims, wherein at least one module (300) is provided with a number of inlet openings (83, 84) lower than the number of outlet openings (9).

8. A control valve provided with a trim (200) comprising a shutter (12) and a resistor (100) according to any of the preceding claims.

9. A valve according to claim 8, wherein at least one module (300) of the resistor (100) is provided with outlet openings (94) located above the shutter (12) position in correspondence of the complete valve opening.

10. A valve according to claims 8 or 9, wherein at least one module (300) of the resistor (100) is provided with outlet openings (95) located below the shutter (12) position in correspondence with the complete valve closure.

## Patentansprüche

1. Widerstand (100) für ein Steuerventil umfassend:
- eine Vielzahl von Modulen (300), umfassend eine oder mehrere ringförmige Scheiben (11), die übereinander gestapelt sind, wobei jedes Modul (300) mit Einlassöffnungen (8) und Auslassöffnungen (9) versehen ist, die durch radiale Durchgänge (13, 131), Richtungsänderungen (15) und axiale Durchgänge (14, 141) in Fluidverbindung sind, die innerhalb der ringförmigen Scheiben (11) ausgebildet sind,
- eine untere Platte (2) und eine obere Platte (3), zwischen denen die Vielzahl von Modulen (300) eingefügt ist,
- Befestigungsmittel, die die untere Platte (2) und die obere Platte (3) und die mehreren Module (300) stabil verbinden, wobei der Widerstand (100) intermodulare axiale Durchgänge (16) aufweist, die die radialen Durchgänge (13, 131) und die axialen Durchgänge (14, 141) von unterschiedlichen Modulen der Vielzahl von Modulen (300) bei einem beliebigen Prozentsatz des Verschluss-Hubs (12) in Fluidverbindung bringen, wobei die ringförmigen Scheiben (11) Vertiefungen (17) entsprechend den Auslassöffnungen (9) aufweisen,
wobei die Höhe der radialen Durchgänge (131) stromaufwärts der axialen intermodularen Durchgänge (16) größer ist als die Höhe der radialen Durchgänge (13) stromabwärts der axialen intermodularen Durchgänge (16), wobei der Widerstand (100) **dadurch gekennzeichnet ist, dass** die Höhe der axialen Durchgänge (141) stromaufwärts der intermodularen axialen Durchgänge (16) größer ist als die Höhe der axialen Durchgänge (14) stromabwärts der intermodularen axialen Durchgänge (16).

2. Widerstand (100) nach Anspruch 1, wobei der Austrittsöffnungsabschnitt (9) in mindestens zwei Austrittsöffnungen des unteren Bereichs (91, 92, 93) unterteilt ist.

3. Widerstand (100) nach Anspruch 1 oder 2, wobei ein einzelnes Modul (300) eine erste Scheibe (111), eine zweite Scheibe (112) und eine Trennscheibe (113) umfasst, die eine geringere Dicke als die anderen zwei Scheiben hat, so dass die radialen Durchgänge (13, 131), die Richtungsänderungen (15) und die axialen Durchgänge (14, 141) innerhalb des Moduls (300) selbst hergestellt sind.

4. Widerstand (100) nach Anspruch 1 oder 2, wobei ein einzelnes Modul (300) zwei aufeinanderfolgende Scheibenpaare (111, 112) und eine Trennscheibe (113) umfasst, so dass die radialen Durchgänge (13, 131), die Richtungsänderungen (15) und die axialen Durchgänge (14, 141) innerhalb des Moduls (300) selbst hergestellt sind.

5. Widerstand nach einem der vorhergehenden Ansprüche, **dadurch gekennzeichnet, dass** seine Struktur mittels Sintertechniken, dreidimensionalem Laser, dreidimensionalem Drucken gebildet ist.

6. Widerstand (100) nach einem der vorhergehenden Ansprüche, wobei die Scheiben (11) durch Elektroerosion gebildet sind, wobei die radialen Durchgänge (13), die Richtungsänderungen (15) und die axialen Durchgänge (14) auf einer einzigen Scheibe (11) hergestellt werden.

7. Widerstand (100) nach einem der vorhergehenden Ansprüche, wobei mindestens ein Modul (300) ist mit einer Anzahl von Einlassöffnungen (83, 84) versehen, die geringer als die Anzahl von Auslassöffnungen (9) ist.

8. Steuerventil, das mit einer Trimmung (200) versehen ist, die einen Verschluss (12) und einen Widerstand (100) nach einem der vorhergehenden Ansprüche umfasst.

9. Ventil nach Anspruch 8, wobei mindestens ein Modul (300) des Widerstands (100) mit Auslassöffnungen (94) versehen ist, die oberhalb der Position des Verschlusses (12) entsprechend der vollständigen Ventilöffnung angeordnet sind.

10. Ventil nach Anspruch 8 oder 9, wobei mindestens ein Modul (300) des Widerstands (100) ist mit Auslassöffnungen (95) versehen, die unterhalb der Position des Verschlusses (12) entsprechend der vollständigen Ventilschließung angeordnet sind.

## Revendications

1. Résistance (100) pour soupape de commande comprenant:
- une pluralité de modules (300), comprenant un ou plusieurs disques annulaires (11) empilés les uns sur les autres, chaque module (300) étant pourvu d'ouvertures d'entrée (8) et d'ouvertures de sortie (9) en communication fluidique à travers des passages radiaux (13, 131), des changements de direction (15) et des passages axiaux (14, 141) formés à l'intérieur desdits disques annulaires (11),
- une plaque inférieure (2) et une plaque supérieure (3) entre lesquelles la pluralité de modules (300) est intercalée,
- des moyens de fixation reliant de manière stable la plaque inférieure (2) et la plaque supérieure (3) et la pluralité de modules (300), la résistance (100) présentant des passages axiaux inter-modulaires (16) qui mettent en communication fluidique les passages radiaux (13, 131) et les passages axiaux (14, 141) de modules différents de ladite pluralité de modules (300) à n'importe quel pourcentage de course d'obturation (12), dans lequel lesdits disques annulaires (11) ont des indentations (17) en correspondance avec les ouvertures de sortie (9),
dans laquelle la hauteur des passages radiaux (131) en amont des passages axiaux inter-modulaires (16) est supérieure à la hauteur des passages radiaux (13) en aval des passages axiaux inter-modulaires (16),
la résistance (100) étant **caractérisée en ce que** la hauteur des passages axiales (141) en amont du passage axial inter-modulaire (1 6) est supérieure à la hauteur des passages axiaux (14) aval des passages axiaux inter-modulaires (16).

2. Résistance (100) selon la revendication 1, dans laquelle la section des ouvertures de sortie (9) est divisée en au moins deux ouvertures de sortie de zone inférieure (91, 92, 93).

3. Résistance (100) selon les revendications 1 ou 2, dans laquelle un seul module (300) comprend un premier disque (111), un deuxième disque (112) et un disque séparateur (113) ayant une épaisseur plus faible que les deux autres disques, de sorte que les passages radiaux (13, 131), les changements de direction (15) et les passages axiaux (14, 141) sont réalisés à l'intérieur du module (300) lui-même.

4. Résistance (100) selon les revendications 1 ou 2, dans laquelle un seul module (300) comprend deux paires consécutives de disques (111, 112) et un disque séparateur (113), de sorte que les passages radiaux (13, 131), les changements de direction (15) et les passages axiaux (14, 141) sont réalisés à l'intérieur du module (300) lui-même.

5. Résistance selon l'une quelconque des revendications précédentes, **caractérisée en ce que** sa structure est formée au moyen de techniques de frittage, laser tridimensionnel, impression tridimensionnelle.

6. Résistance (100) selon l'une quelconque des revendications précédentes, dans laquelle les disques (11) sont formés par électroérosion, qui réalise les passages radiaux (13), les changements de direction (15) et les passages axiaux (14) sur un seul disque (11).

7. Résistance (100) selon l'une quelconque des revendications précédentes, dans laquelle au moins un module (300) est pourvu d'un nombre d'ouvertures d'entrée (83, 84) inférieur au nombre d'ouvertures de sortie (9).

8. Soupape de commande munie d'une garniture (200) comprenant un obturateur (12) et une résistance (100) selon l'une quelconque des revendications précédentes.

9. Soupape selon la revendication 8, dans laquelle au moins un module (300) de la résistance (100) est pourvu d'ouvertures de sortie (94) situées au-dessus de la position de l'obturateur (12) en correspondance avec l'ouverture complète de la soupape.

10. Soupape selon les revendications 8 ou 9, dans laquelle au moins un module (300) de la résistance (100) est pourvu d'ouvertures de sortie (95) situées au-dessous de la position de l'obturateur (12) en correspondance avec la fermeture complète de la soupape.
